**Europäisches Patentamt**

**European Patent Office**

**Office européen des brevets**

(19)

(11) Veröffentlichungsnummer: **0 013 312**
**B1**

# EUROPÄISCHE PATENTSCHRIFT

(12)

(45) Veröffentlichungstag der Patentschrift:
**17.02.82**

(21) Anmeldenummer: **79104435.7**

(22) Anmeldetag: **12.11.79**

(51) Int. Cl.³: **H 01 G 1/11**

(54) **Elektrischer Kondensator mit einer Abschaltvorrichtung.**

(30) Priorität: **13.01.79 DE 2901271**

(43) Veröffentlichungstag der Anmeldung:
**23.07.80 Patentblatt 80/15**

(45) Bekanntmachung des Hinweises auf die Patenterteilung:
**17.02.82 Patentblatt 82/7**

(84) Benannte Vertragsstaaten:
**AT BE CH DE FR GB IT SE**

(56) Entgegenhaltungen:
**DE-A-2 350 271**
**US-A-3 304 473**

(73) Patentinhaber: **ROBERT BOSCH GMBH, Postfach 50, D-7000 Stuttgart 1 (DE)**

(72) Erfinder: **Kysely, Zdenek, Dipl.-Ing., In der Neckarhalde 1/1, D-7148 Remseck 1 (DE)**
Erfinder: **Völker, Winfried, Dr., Füllerstrasse 23, D-7016 Gerlingen (DE)**

## Elektrischer Kondensator mit einer Abschaltvorrichtung

### Stand der Technik

Die Erfindung geht aus von einem elektrischen Kondensator nach der Gattung des Hauptanspruchs. Es ist schon durch die DE-C-2 350 271 ein solcher Kondensator mit Abschaltvorrichtung bekannt geworden. Die Abschaltvorrichtung hat einen plattenartig ausgebildeten und an den Umfang des Kondensatorwickels angelegten Körper, der biegsam oder zerbrechbar ist, und einen durchtrennbaren Leiter, der die ganze Länge des biegsamen Körpers auf dessen dem Wickel abgekehrten Seite überspannt. Der Leiter ist einerseits mit einer der Anschlußbrücken und andererseits mit einem Anschlußdraht elektrisch leitend verbunden.

### Vorteile der Erfindung

Der erfindungsgemäße Kondensator mit den kennzeichnenden Merkmalen des Hauptanspruchs hat demgegenüber die Vorteile der billigeren Herstellbarkeit und der erhöhten Abschaltsicherheit.

Durch die in den Unteransprüchen aufgeführten Maßnahmen sind vorteilhafte Weiterbildungen und Verbesserungen des im Hauptanspruch angegebenen Kondensators möglich.

### Zeichnungen

Vier Ausführungsbeispiele der Erfindung sind in den Zeichnungen dargestellt und in der nachfolgenden Beschreibung näher erläutert. Es zeigen Fig. 1 ein erstes Ausführungsbeispiel im Schrägbild, Fig. 2 ein zweites Ausführungsbeispiel im Schrägbild, die Fig. 3 und 4 Einzelheiten des zweiten Ausführungsbeispiels im Schnittbild, Fig. 5 ein drittes Ausführungsbeispiel in der Draufsicht, Fig. 6 ein viertes Ausführungsbeispiel in der Draufsicht und Fig. 7 eine Einheit des vierten Ausführungsbeispiels im Schrägbild.

### Beschreibung der Ausführungsbeispiele

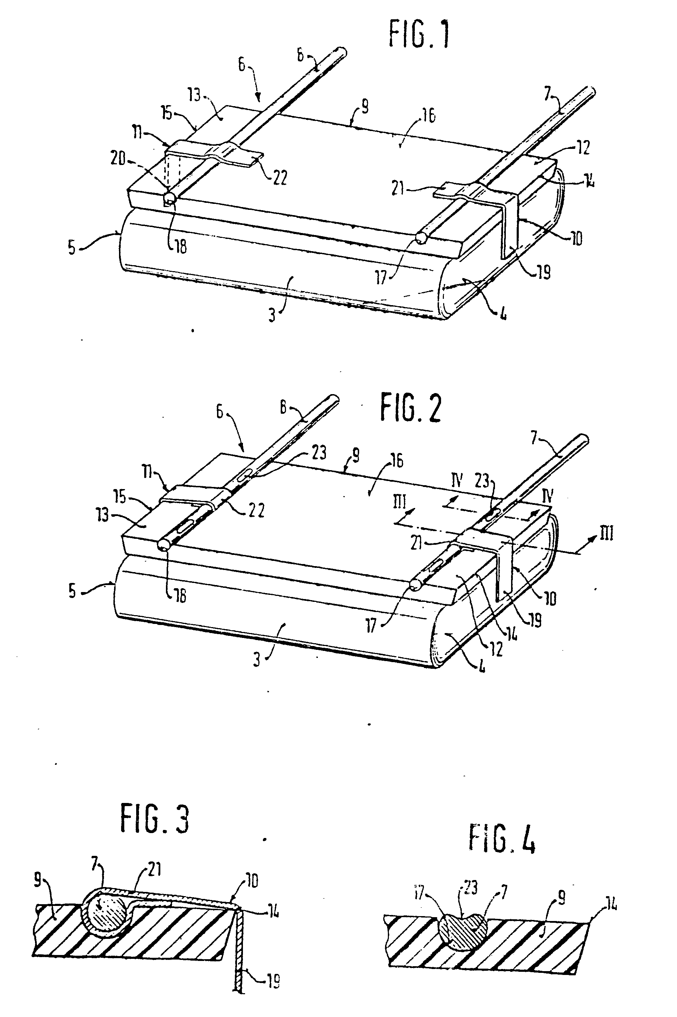

Das erste Ausführungsbeispiel nach Fig. 1 hat einen Kondensatorwickel 3 mit einem Dielektrikum, zwei leitend mit dem Kondensatorwickel 3 verbundene Anschlußbrücken 4, 5, eine Abschaltvorrichtung 6 und zwei Anschlußdrähte 7, 8.

Das Dielektrikum ist derart beschaffen, daß es bei unzulässiger hoher Erwärmung des Kondensatorwickels 3 Gase bildet, die den Kondensatorwickel 3 aufblähen.

Die Abschaltvorrichtung 6 besteht aus einem biegefesten plattenartigen Körper 9 aus Isolierstoff und zwei Leitern 10, 11. Der biegefeste Körper 9 liegt an dem Umfang des Kondensatorwickels 3 an und hat neben den Anschlußbrücken 4, 5 befindliche Enden 12, 13 mit scharfen Kanten 14, 15 und auf einer vom Kondensatorwickel 3 abgekehrten Seite 16 zwei die Wickelachse des Kondensatorwickels 3 kreuzende Nuten 17, 18. Die Kanten 14, 15 verlaufen parallel zu Ebenen, in denen die Anschlußbrücken 4, 5 liegen. Die Anschlußdrähte 7, 8 sind je mit einem Teil ihrer Länge in die Nuten 17, 18 eingepreßt. Die Leiter 10, 11 sind in Form von folienartig dünnen, elektrisch leitenden Bändern ausgebildet.

Die Leiter 10, 11 sind jeweils mit einem Ende 19 bzw. 20 an den Anschlußbrücken 4 bzw. 5 angeschweißt, um die Kanten 14, 15 auf die Seite 16 geführt und gespannt und mit ihren zweiten Enden 21 bzw. 22 an den Anschlußdrähten 7 bzw. 8 angeschweißt. An Stelle von Schweißverbindungen können wahlweise Lötverbindungen vorgesehen werden.

Wenn sich der Kondensatorwickel 3 infolge unzulässiger Erwärmung aufbaucht, wird der Körper 9 quer zur Längsachse des Kondensatorwickels 3 bewegt. Dadurch spannt der Körper 9 die Leiter 10, 11, bis schließlich wenigstens einer derselben durchtrennt wird und dieserart die elektrische Verbindung zwischen der benachbarten Anschlußbrücke 4 oder 5 und dem zugeordneten Anschlußdraht 7 bzw. 8 abschaltet. Die scharfen Kanten 14, 15 wirken in vorteilhafter Weise scherend auf die Leiter 10, 11 und begünstigen dieserart das Durchtrennen. Falls eine erhöhte Scher- oder Schneidewirkung erwünscht ist, so wird der Körper 9 wenigstens in Bereich seiner Enden 12, 13 aus Metall hergestellt.

Die Entfernung der Enden 12, 13 des Körpers 9 ist größer gewählt als der Abstand der äußeren Oberflächen der Anschlußbrücken 4, 5. Dadurch verlaufen die Leiter 10, 11 nahe den Enden 12, 13 in Abständen zu den Anschlußbrücken 4, 5. Dieser Verlauf der Leiter 10, 11 erbringt den Vorteil, daß ein sicheres Abschalten auch dann erfolgt, wenn die Leiter 10, 11 nicht in Deckung zu den Kanten 14, 15, sondern im Bereich zwischen den letzteren und den Anschlußbrücken 4, 5 reißen sollten.

An Stelle der bandartig ausgebildeten Leiter 10, 11 können auch Drähte verwendet werden. Die Verwendung von Drähten ermöglicht es, den Körper 9 in werkstoffsparender Weise stabförmig auszubilden.

Beim zweiten Ausführungsbeispiel nach den Fig. 2, 3 und 4 sind die Leiter 10, 11 mit ihren Enden 21, 22 um die Anschlußdrähte 7, 8 geschlungen und mit den letzteren verschweißt oder verlötet. Die mit den Leitern 10, 11 vereinigten Anschlußdrähte 7, 8 sind in die Nuten 17, 18 eingelegt und durch Erzeugung von Quetschzonen 23 mit dem Körper 9 unlösbar vereinigt.

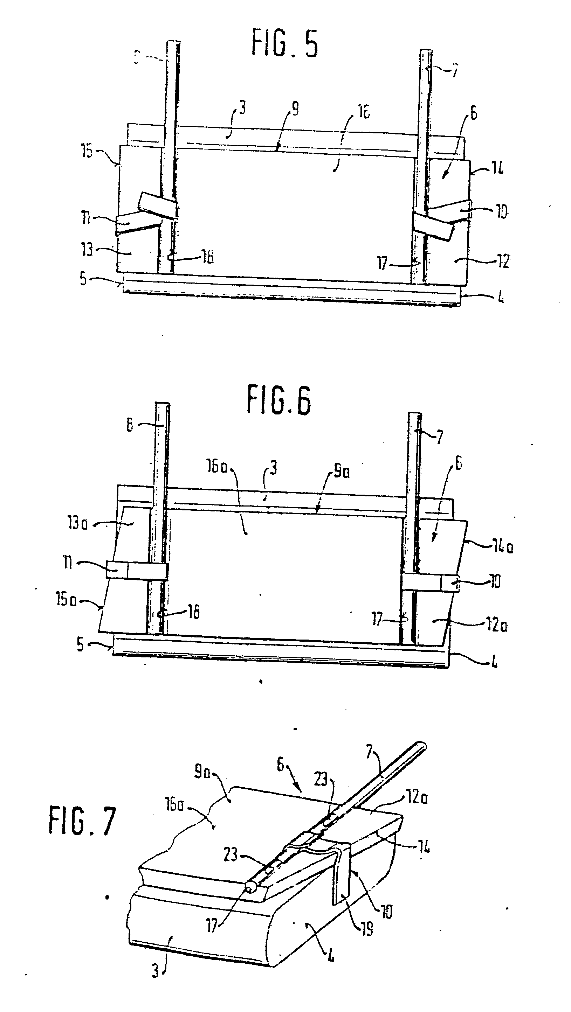

Die bandartigen Leiter 10, 11 sind beim dritten Ausführungsbeispiel nach Fig. 5 auf der Seite 16 des Körpers 9 schräg zur Längsachse des Kondensatorwickels 3 ausgerichtet. Dadurch greifen die Kanten 14, 15 der Enden 12, 13 im wesentlichen punktförmig an den Leitern 10, 11 an. Deshalb ist die Scherbeanspruchung jeweils längs eines der Ränder der Leiter 10 bzw. 11 größer. Diese größere Scherbeanspruchung begünstigt das Durchtrennen der Leiter 10, 11.

Im vierten Ausbildungsbeispiel nach den Fig. 6 und 7 hat ein Körper 9a Enden 12a, 13a mit Kanten 14a, 15a, die die Längsachse des Kondensatorwickels 3 in einem von 90 Grad abweichenden Winkel kreuzen. Die auf der Seite 16a des Körpers 9a verlaufenden Teillängen der Leiter 10, 11 sind parallel zur Längsachse des Kondensatorwickels 3 ausgerichtet, so daß wiederum die Kanten 14a, 15a im wesentlichen punktförmig an den Leitern 10, 11 angreifen.

Als Werkstoff für die Leiter 10, 11 können Metalle oder Metallegierungen, deren Schmelztemperatur wesentlich niedriger als von beispielsweise Kupfer oder Silber liegen, verwendet werden. Dadurch wird erreicht, daß während des Durchtrennens der Leiter 10, 11 der hindurchfließende Strom mit Sicherheit die kleiner werdenden Leiterquerschnitte auf Schmelztemperatur erhitzt. Im Bereich der schmelzenden Stellen verkürzen sich die Leiter 10, 11. Diese Verkürzungen ergeben den Vorteil, daß auch bei hohen Spannungen ein zuverlässiges Abschalten stattfindet.

Die beschriebenen Ausführungsbeispiele des Kondensators mit Abschaltvorrichtung 6 können in einem Schutzgehäuse untergebracht werden. Zwischen dem Schutzgehäuse und dem Körper 9 bzw. 9a kann beispielsweise, wie in der DE-C-2 350 271 beschrieben, eine Zwischenlage aus elastischem Material vorgesehen werden.

Die Abschaltvorrichtung eignet sich in gleicher Weise und mit gleichem Aufbau auch für Stapelkondensatoren, welche beispielsweise aus einem größeren sogenannten Mutterkondensator durch Schneiden oder Sägen hergestellt sind.

Ergänzend wird darauf hingewiesen, daß die beschriebene Abschaltvorrichtung prinzipiell auch verwendbar ist für solche Kondensatorenwickel, die zwei Kapazitäten enthalten.

## Patentansprüche

1. Elektrischer Kondensator mit einem Kondensatorwickel oder -stapel, mit Anschlußbrükken, mit einem Dielektrikum, das bei unzulässig hoher Erwärmung den Kondensator aufblähende Gase bildet, und mit einer Abschaltvorrichtung, die einen elektrischen Leiter, der im Falle eines durch Gasbildung entstehenden Überdruckes im Kondensator durchtrennt wird, und einen an die aufblähende Oberfläche des Kondensators angelegten Körper aufweist, dadurch gekennzeichnet, daß der Körper (9, 9a) biegesteif ausgebildet ist und daß der elektrische Leiter (10) an einer Anschlußbrücke (4) befestigt, von dieser Befestigung ausgehend um das benachbarte Ende (12; 12a) des Körpers (9; 9a) geführt und im Bereich dieses Endes (12, 12a) mit diesem Körper (9; 9a) und mit einem ihm zugeordneten Anschlußdraht verbunden ist.

2. Kondensator nach Anspruch 1, dadurch gekennzeichnet, daß ein zweiter durchtrennbarer Leiter (11) von einer weiteren der ersten gegenüberliegenden Anschlußbrücke (5) über das dieser benachbarte Ende (13; 13a) des Körpers (9; 9a) zu einem ihm zugeordneten, mit ihm verbundenen Anschlußdraht (7, 8) geführt ist.

3. Kondensator nach den Ansprüchen 1 und 2, dadurch gekennzeichnet, daß die genannten Enden (12, 13; 12a, 13a) des biegesteifen Körpers (9; 9a) schneidenartig scharf ausgebildete Kanten (14, 14; 14a, 15a) aufweisen.

4. Kondensator nach den Ansprüchen 1 bis 3, dadurch gekennzeichnet, daß die Entfernung der genannten Enden (12, 13; 12a, 13a) größer ist als der Abstand der äußeren Oberflächen Anschlußbrücken (4, 5).

5. Kondensator nach den Ansprüchen 1 bis 4, dadurch gekennzeichnet, daß der biegesteife Körper (9; 9a) wenigstens im Bereich seiner scharfkantigen Enden (12, 13; 12a, 13a) aus Metall besteht.

6. Kondensator nach den Ansprüchen 1 bis 5, dadurch gekennzeichnet, daß die Leiter (10, 11) aus Silber bestehen.

7. Kondensator nach den Ansprüchen 1 bis 5, dadurch gekennzeichnet, daß die Leiter (10, 11) aus Kupfer bestehen.

8. Kondensator nach den Ansprüchen 1 bis 5, dadurch gekennzeichnet, daß die Leiter (10, 11) aus Metall mit wesentlich niedriger Schmelztemperatur als Kupfer bzw. Silber bestehen.

9. Kondensator nach den Ansprüchen 1 bis 8, dadurch gekennzeichnet, daß die beiden durchtrennbaren Leiter (10, 11) Drahtform haben.

10. Kondensator nach den Ansprüchen 1 bis 8, dadurch gekennzeichnet, daß die beiden Leiter (10, 11) in Form von folienartig dünnen Bändern ausgebildet sind.

11. Kondensator nach Anspruch 10, dadurch gekennzeichnet, daß die scharfen Kanten (14, 15; 14a, 15a) des Körpers (9; 9a) zu den Ebenen der Anschlußbrücken (4, 5) geneigt gerichtet sind.

12. Kondensator nach Anspruch 10, dadurch gekennzeichnet, daß diejenigen Teillängen der bandartigen Leiter (10, 11), die an der dem Kondensatorwickel oder -stapel (3) abgekehrten Seite (16) des Körpers (9) anliegen, derart gerichtet sind, daß sie mit den scharfen Kanten (14, 15) des Körpers (9, 9a) einen von 90 Grad abweichenden Winkel einschließen.

13. Kondensator nach den Ansprüchen 1 bis 12, dadurch gekennzeichnet, daß in die dem Kondensatorwickel oder -stapel (3) abgekehrte Seite (16; 16a) des Körpers (9; 9a) zwei die Hauptachse des Wickels oder Stapels (3) kreuzende Nuten (17, 18) eingearbeitet sind, daß jeweils ein Ende (21, 22) eines jeden Leiters (10, 11) um einen Anschlußdraht (7, 8) geschlungen und mit diesem vorzugsweise verschweißt ist, und daß die Anschlußdrähte (7, 8) in die Nuten (17, 18) eingeklemmt sind.

## Claims

1. An electrical capacitor comprising a capacitor winding or stack, contact bridges, a dielectric which forms expanding gas on the occurrence of an inadmissibly high heating of the capacitor, and a cut-out device which has an electrical conductor which is broken in the case of an excess pressure in the capacitor resulting from a formation of gas and a member applied to the expansible surface of the capacitor, characterised in that, the member (9, 9a) is made resistant to bending and that the electrical conductor (10) is fixed to a contact bridge (4), proceeding from the said fixing is guided around the adjacent end (12; 12a) of the member (9; 9a) and is connected in the region of the said end (12, 12a) to the said member (9; 9a) and to a terminal wire associated therewith.

2. A capacitor according to claim 1, characterised in that, a second frangible conductor (11) is guided from a further contact bridge (5) lying opposite the first contact bridge over the end (13; 13a) of the member (9; 9a) adjacent to the further contact bridge to a terminal wire (7, 8) associated with the member and connected thereto.

3. A capacitor according to claims 1 and 2, characterised in that, the said ends (12, 13; 12a, 13a) of the member (9; 9a) resistant to bending have sharp knife-like edges (14, 15; 14a, 15a).

4. A capacitor according to claims 1 to 3, characterised in that, the separation of the said ends (12, 13; 12a, 13a) is greater than the distance between the outer surfaces of the contact bridges (4, 5).

5. A capacitor according to claims 1 to 4, characterised in that, at least in the region of its sharp edged ends (12, 13; 12a, 13a), the member (9; 9a) resistant to bending consists of metal.

6. A capacitor according to claims 1 to 5, characterised in that, the conductors (10, 11) consist of silver.

7. A capacitor according to claims 1 to 5, characterised in that, the conductors (10, 11) consist of copper.

8. A capacitor according to claims 1 to 5, characterised in that, the conductors (10, 11) consist of metal having a substantially lower melting point than copper or silver.

9. A capacitor according to claims 1 to 8, characterised in that, the two frangible conductors (10, 11) are in the form of wire.

10. A capacitor according to claims 1 to 8, characterised in that, the two conductors (10, 11) are made in the form of foil-like thin strips.

11. A capacitor according to claim 10, characterised in that, the sharp edges (14, 15; 14a, 15a) of the member (9; 9a) are inclined with respect to the planes of the contact bridges (4, 5).

12. A capacitor according to claim 10, characterised in that, those partial lengths of the strip-like conductors (10, 11) which engage the side (16) of the member (9) remote form the capacitor winding or stack (3) are so orientated that they include an angle with the sharp edges (14, 15) of the member (9, 9a) deviating from 90°.

13. A capacitor according to claims 1 to 12, characterised in that, two grooves (17, 18) crossing the main axis of the winding or stack (3) are formed in the side (16; 16a) of the member (9; 9a) remote from the capacitor winding or stack (3), that a respective end (21, 22) of a respective conductor (10, 11) is looped around a terminal wire (7, 8) and is prefereably welded thereto and that the terminal wires (7, 8) are jammed in the grooves (17, 18).

## Revendications

1. Condensateur électrique avec un enroulement de condensateur ou un empilage de condensateur, avec des ponts de raccordement, avec un diélectrique, qui en cas d'un échauffement inadmissiblement élevé du condensateur, dégage des gaz gonflants, et avec un dispositif de mise hors circuit comportant un conducteur électrique se rompant dans le cas d'une surpression créée dans le condensateur par dégagement de gaz, et une structure appliquée sur la surface susceptible d'être gonflée du condensateur, condensateur caractérisé en ce que la structure (9, 9a) est résistante à la flexion et que le conducteur électrique (10) est fixé à un pont de raccordement (4), et à partir de cette fixation, passe autour de l'extrémité voisine (12, 12a) de la structure (9, 9a) et est relié au voisinage de cette extrémité (12, 12a) avec cette structure (9, 9a) et avec un fil de raccordement qui lui est associé.

2. Condensateur selon la revendication 1, caractérisé en ce qu'un second conducteur (11) susceptible de se rompre, partant d'un autre pont de raccordement (5) opposé au premier, passe par-dessus l'extrémité (13, 13a), voisine de ce second pont, de la structure (9, 9a) et aboutit à un fil de raccordement (7, 8) qui lui est associé et auquel il est relié.

3. Condensateur selon les revendications 1 et 2, caractérisé en ce que les extrémités précitées (12, 13; 12a, 13a) de la structure (9, 9a) résistantes à la flexion, comportent des arêtes aiguës en forme de tranchants (14, 15; 14a, 15a).

4. Condensateur selon les revendications 1 à 3, caractérisé en ce que la distance entre les extrémités précitées (12, 13; 12a, 13a) est supérieure à la distance entre les faces externes des ponts de raccordement (4, 5).

5. Condensateur selon les revendications 1 à 4, caractérisé en ce que la structure résistante à la flexion (9, 9a) est constituée de métal au moins dans la zone de ses extrémités à arêtes aiguës (12, 13; 12a, 13a).

6. Condensateur selon les revendications 1 à 5, caractérisé en ce que les conducteurs (10, 11) sont en argent.

7. Condensateur selon les revendications 1 à 5, caractérisé en ce que les conducteurs (10, 11) sont en cuivre.

8. Condensateur selon les revendications 1 à 5, caractérisé en ce que les conducteurs (10, 11) sont en un métal présentant une température de fusion notablement inférieure à celle du cuivre ou de l'argent.

9. Condensateur selon les revendications 1 à 8, caractérisé en ce que les deux conducteurs susceptibles de se rompre (10, 11) revêtent la forme de fils.

10. Condensateur selon les revendications 1 à 8, caractérisé en ce que les deux conducteurs (10, 11) sont constitués par des bandes minces en forme de feuilles.

11. Condensateur selon la revendication 10, caractérisé en ce que les arêtes aiguës (14, 15; 14a, 15a) de la structure (9, 9a) sont inclinées vers les plans des ponts de raccordement (4, 5).

12. Condensateur selon la revendication 10, caractérisé en ce que les longueurs partielles respectives des conducteurs (10, 11) en forme de bandes, qui s'appliquent sur la face (16), opposée à l'enroulement de condensateur ou à l'empilage de condensateur (3), de la structure (9), sont orientées de façon telle qu'elles délimitent avec les arêtes aiguës (14, 15) de la structure (9, 9a) un angle différant de 90°.

13. Condensateur selon les revendications 1 à 12, caractérisé en ce que, dans la face (16, 16a), opposée l'enroulement de condensateur ou à l'empilage de condensateur (3), de la structure (9, 9a) sont usinées deux rainures (17, 18) croisant l'axe principal de l'enroulement ou de l'empilage (3), une extrémité (21, 22) de chacun des conducteurs (10, 11) étant enroulée autour d'un fil de raccordement (7, 8) et étant, de préférence, soudée avec ce fil, tandis que les fils de raccordement (7, 8) sont bloqués dans les rainures (17, 18).

# FIG.1

# FIG.2

# FIG.3

# FIG.4

# FIG. 5

# FIG.6

# FIG.7